Europäisches Patentamt

European Patent Office

Office européen des brevets

(11) Publication number: **0 608 224 B1**

(19)

# EUROPEAN PATENT SPECIFICATION

(45) Date of publication of patent specification: **18.10.95**

(51) Int. Cl.⁶: **A23L 2/42**, A23L 2/44, A23L 2/54

(21) Application number: **92903769.5**

(22) Date of filing: **31.01.92**

(86) International application number: **PCT/CA92/00037**

(87) International publication number: **WO 93/07765 (29.04.93 93/11)**

(54) **PRESERVATION OF FRESH FRUIT JUICES AND FRUIT JUICE BLENDS.**

(30) Priority: **17.10.91 US 779368**

(43) Date of publication of application:
**03.08.94 Bulletin 94/31**

(45) Publication of the grant of the patent:
**18.10.95 Bulletin 95/42**

(84) Designated Contracting States:
**DE ES FR GB IT NL**

(56) References cited:
**WO-A-88/06411          WO-A-90/02799
DE-A- 3 734 025         FR-A- 2 364 623
US-A- 2 333 898         US-A- 2 500 670
US-A- 4 529 606**

(73) Proprietor: **THE UNIVERSITY OF BRITISH CO-LUMBIA
Room 331,
IRC Building,
2194 Health Sciences Mall
Vancouver,
British Columbia, V6T 1W5 (CA)**

(72) Inventor: **WU, Chiu, Hui
4654 West 14th Avenue
Vancouver, British Columbia V6R 2Y6 (CA)**
Inventor: **POWRIE, William, D.
505 Ventura Crescent
North Vancouver, British Columbia V7N 3G
(CA)**

(74) Representative: **BROOKES & MARTIN
High Holborn House
52/54 High Holborn
London, WC1V 6SE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

FIELD OF THE INVENTION

This invention pertains to a novel method of preserving fruit juices and fruit juice blends. More particularly, this invention is directed to a method for preserving the fresh flavour, colour, body and ascorbic acid content of citrus juices, tropical fruit juices, citrus-tropical fruit blends and other fruit juices and fruit juice blends, held in a storage for periods up to about eight weeks at refrigerated temperatures of 1°C to 6°C.

BACKGROUND OF THE INVENTION

The shelf life of fresh citrus juices (orange and grapefruit) packaged in polyethylene bottles is dependent primarily on storage temperature (Fellers, J. Food Sci. 53, 1699, 1988): 1.1°C, 16-22 days; 4.4°C, 10-16 days; and 7.8°C 5-8 days. Kopelman and Rauchwerger (J. Food Proc. Preserv. 8; 241, 1985) reported the following shelf life values for Shamouki orange juice: 2.0°C, 16 days; 2.7°C, 14 days; 5.7°C, 10 days; 7.4°C, 9 days; 9.6°C, 4 days. The pH values of various orange juices range from 3.0 to 4.0. The pH for grapefruit juice is about 3.4. At these pH values, molds and yeast organisms can proliferate.

During the storage of citrus juices, ascorbic acid decomposes, the rate depending on the amount of oxygen, the pH and the storage temperature of the juice. Orange juice (pH 4.06) held for 16 days at 5°C lost 70% of the original amount of ascorbic acid (Alli and Kermasha, J. Food Sci. 54, 674, 1989).

Fresh citrus juices, tropical fruit juices and citrus-tropical juice blends, fruit juices and fruit juice blends are popular with consumers since they possess ripe fruit quality attributes such as fresh fruit flavour, an appealing colour and turbidity (cloud). The addition of tropical fruit juices such as papaya, mango and pineapple to citrus juices has gained a niche in the marketplace. Blends of citrus juices with up to about 20% tropical fruit juices have pleasant flavour profiles.

The shelf life of fruit juices can be prolonged by heat treatment to inactivate enzymes and microorganisms (J.J. Jen, Quality Factors of Fruits and Vegetables. 1989. American Chemical Society, Washington, D.C.). However, with pasteurization of juices, the fresh fruit flavour changes to a heat-processed flavour. In the case of orange juice, pasteurization brings about the formation of secondary aroma compounds such as oxidation products of limonene and of Maillard reaction products (P. Schrier, In Quality in Stored and Processed Vegatables and Fruit, 1981. Goodenough, P.W. and Atkin, R.K. Eds. Academic Press, New York).

Modified atmosphere packaging (MAP) is a term used to denote the process of gasifying the headspace around a commodity such as a fruit or vegetable in a container prior to hermetically sealing the container. The gas mixture introduced into the headspace is commonly made up of oxygen, carbon dioxide, nitrogen and sometimes noble gases. The composition of the gas mixture is dependent on the type of fruit or vegetable, the cultivar and the required storage time. The container generally has specific gas permeability characteristics, the values being dependent on the rate of respiration of the fruit or vegetable involved and the desired ultimate gas composition. At some point during storage of a fruit or vegetable under MAP, an equilibrium gas mixture in the headspace of the container will evolve whereupon the contents of oxygen, carbon dioxide, nitrogen and other gases in the headspace gas mixture are constant. Under these circumstances, the amount of oxygen utilized per unit time in the respiration of a fruit or vegetable is equal to the amount of oxygen transported through the walls of the container. Further, the amount of carbon dioxide generated per unit time in the fruit respiration is equal to the loss of carbon dioxide per unit time from the headspace by transport through the walls of a container to the outside air.

References relating to modified atmosphere packaging of fruit and patents granted for such a technique have conventionally focused on whole, uncut commodities. In general, MAP technology is concerned with the maintenance of a suitable oxygen-containing microatmosphere around whole fruits in oxygen permeable containers. MAP technology for whole fruits requires that aerobic conditions be maintained in the microatmosphere enveloping the whole fruit in order to prevent the development of anaerobic or fermentation "off-flavour" in the fruit. Yet at the same time, the atmosphere must contain a sufficient amount of carbon dioxide to inhibit the rates of fruit respiration, ripening and microbial growth. Certain patents disclose the removal of some of the ethylene and carbon dioxide in the surrounding atmosphere by the inclusion of a packet of chemicals in the container prior to sealing.

In a general sense, the development of modified atmosphere packaging (MAP) of fruit is in its infancy. Studies have focused on the $O_2/CO_2$ gas flushing of packages containing whole strawberries. It has been determined that with such a process, the storage life of the strawberries can be lengthened by up to eight days. It has also been discovered that when apples are packaged in Cryovac™ bags with a mofified atmosphere, the shelf life of the whole apples is extended from one week to four to six weeks (LaBell, Food Processing, January, 152, 1985).

A wide variety of plastic films with different permeabilities to gases are commercially available for the modified atmosphere storage of fruits. Saguy and Mannheim (Cooling and Ripening of Fruits in Relation to Quality, Refrigeration Science and Technology, 149, 1973, Int. Inst. Refrig.) have shown that selected plastic films with various $O_2$ permeabilities can prolong the shelf life of strawberries. Marcellin (Rev. Gen. Froid 64:217, 1974) discusses the use of a polyethylene and a silicone membrane for the modified atmosphere storage of several fruits. It has been noted that $O_2$ transport through the plastic films ensured aerobic respiration of the fruits, yet contributed to the proliferation of aerobic microorganisms such as molds.

The following patents relate directly or indirectly to whole or fruit segment preservation:

| United States Patent Number | Inventor | Issue Date |
|---|---|---|
| 3,111,412 | Mouk | Nov. 19, 1963 |
| 4,001,443 | Anantray | Jan. 4, 1977 |
| 4,006,257 | Kolk | Feb. 1, 1977 |
| 4,055,931 | Myers | Nov. 1, 1977 |
| 4,079,152 | Bedrosian et al. | Mar. 14, 1978 |
| 4,235,750 | Cazalet | Nov. 25, 1980 |
| 4,331,693 | Gozdziewicz et al. | May 25, 1982 |
| 4,337,276 | Nakamura et al. | June 29, 1982 |
| 4,411,921 | Woodruff | Oct. 25, 1983 |
| 4,423,080 | Bedrosian et al. | Dec. 27, 1983 |
| 4,515,266 | Myers | May 7, 1985 |
| 4,895,729 | Powrie et al. | Jan 23, 1990 |
| West German Patent Number | | |
| 2,922,145 | Kurz | Mar. 20, 1980 |
| 3,136,622 | Chekalov et al. | May 30, 1984 |
| Austrian Patent Number | | |
| 225,346 | Fetkenheue | Jul. 31, 1985 |

Modified atmosphere packaging technology for the preservation of freshly extracted fruit juices and juice blends has not been reported. Modified atmosphere packaging technology has been applied to fruits and vegetables where the cells remain intact and continue to respire. Modified atmosphere packaging technology also usually employs gases with low to moderate levels of carbon dioxide, or none at all.

SUMMARY OF THE INVENTION

The invention pertains to a process for preserving fresh fruit juice which comprises sanitizing the outer surface of a fruit, extracting juice from the edible portion of the fruit, at which time the cell walls are broken or disrupted, gasifying the juice with an oxygen containing, carbon dioxide-containing gas mixture, placing the juice in a high gas barrier container to a level which retains a headspace of 1 to 10% of the total liquid volume, hermetically sealing the container and rapidly cooling the juice in the container to -1°C to 2°C.

Alternatively, gasification of a juice or juice blend may take place when the product is in the container.

The fruit juice can be a citrus fruit juice, a tropical fruit juice, or any other fruit juice, or a combination thereof and the headspace volume can be 1% to 10%. Preferably, the headspace volume can be 3% to 7%.

The invention also pertains to a process for preserving fresh fruit juice which comprises: (a) introducing an oxygen-containing, carbon dioxide-containing gas mixture into the juice by bubble-streaming to bring about a predetermined level of gas saturation of the juice for each of the gases in the dissolved state; (b) packaging the gas-treated juice in a high gas-barrier container to prevent air entry into the container and outflow of gas within the containers; and (c) rapidly cooling the juice in the container for cold shocking of the juice.

Alternatively, gasification of a juice or juice blend may take place when the product is in the container.

The invention is also directed to a process for preserving juice obtained from fresh fruit which comprises: (a) sanitizing the outer surface of a fruit from which the fruit is to be derived; (b) extracting juice from the edible portion of the fruit, at which time all of the cells are broken or disrupted; (c) gasifying the juice with an oxygen-containing, carbon dioxide-containing gas mixture to bring about a specific level of gas saturation of the juice for each gas in its dissolved state; (d) filling a container with the juice so that a headspace volume of 1% to 10% of total liquid volume exists in the container; and (e) cold shocking the juice in the container by rapidly cooling the container and juice to a temperature of -1°C to 2°C.

The headspace volume can preferably be 3% to 7% and the fruit can be sanitized with a sanitizing agent, which can be selected from the group consisting of chlorine, peroxide, bleach and an oxidizing agent. The sanitizing agent can be chlorine in water.

The invention relates to a process for preserving fresh fruit juice which comprises: (a) sanitizing the outer surface of a fruit from which juice is to be extracted with a sanitizing agent to inactivate spoilage organisms; (b) extracting juice from the edible portion of the fruit; (c) gasifying the juice at 5°C to 20°C by bubble streaming an oxygen-containing, carbon dioxide-containing gas mixture through the juice; (d) filling a high gas barrier container with the juice to a level to attain a headspace volume of 3 to 7% of the total juice volume; (e) hermetically sealing the container; and (f) rapidly cooling the juice in a container to a temperature between -1°C and 2°C with a minimum hold time of 12 to 24 hours.

The gas mixture can consist of about 2% to 15% oxygen and 10% to 80% carbon dioxide, and an inert gas. The inert gas can be selected from the group consisting of nitrogen, argon, helium and/or other inert gases.

The juice can be gasified by bubble streaming. The juice can be gasified at a temperature of 5°C to 20°C. The gas mixture can be introduced into the juice in the form of small bubbles from a plurality of orifices in a gas dispersion unit. The gas dispersion unit can be constructed of inter-connected perforated pipes or sintered metal plates or sintered glass plates.

The container must be composed of a material which has high gas-barrier properties so that internal gases are not transported through the walls of the container to the atmosphere and atmospheric air is not transported through the walls of the container to the interior of the container. The container can be constructed of a flexible, semi-flexible or rigid material. The container can be composed of plastic, metal, paperboard or glass, in the form of a bag or bottle. The container can be a polyethylene-polyvinyl alcohol-polyethylene laminate.

The juice can be selected from the group consisting of a fruit juice, a citrus juice, a tropical fruit juice, a citrus-tropical fruit blend and the juice can be stored at a temperature between -1°C to 6°C. The fruit can be sanitized with chlorinated water.

The juice may contain only broken or disrupted fruit cells. The juice can be placed into the container before it is gasified.

## DRAWINGS

In drawings which disclose specific embodiments of the invention:

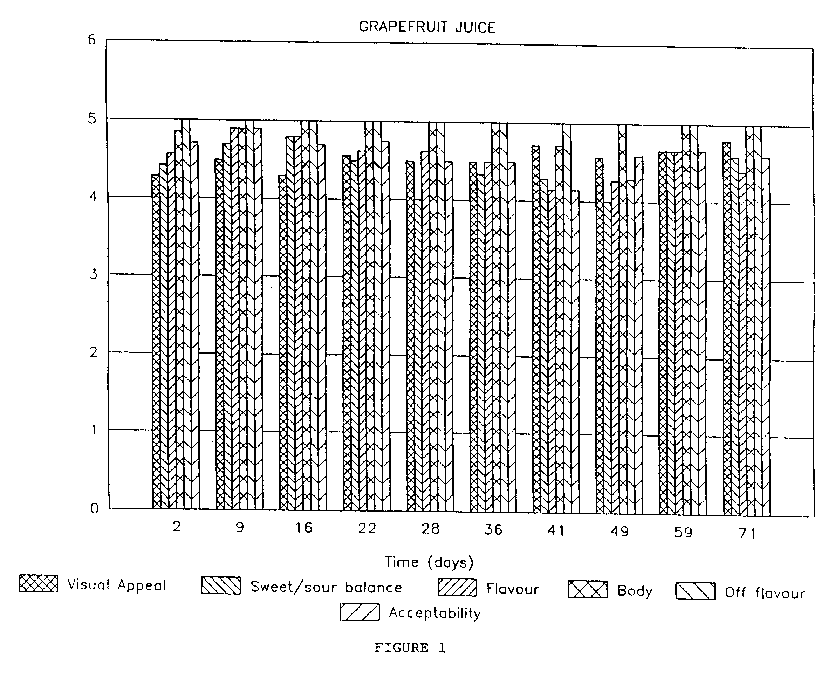

Figure 1 illustrates a graph of sensory evaluation results of grapefruit juice stored for 71 days according to the invention.

## DETAILED DESCRIPTION OF SPECIFIC EMBODIMENTS OF THE INVENTION

This invention pertains directed to a process system for preserving fresh citrus juices, tropical fruit juices, citrus-tropical fruit juice blends, and any other fruit juices, which have been extracted from ripe, sanitized fruits, for storage periods up to eight weeks at refrigerated temperatures of 0 to 6°C without appreciable loss of fresh natural flavour, colour and texture. The process involves the sanitizing of the outer surface of a fruit, extracting the juice from the edible portion of the fruit, at which time all of the cells are broken or ruptured, gasifying the juice or juice blend with an oxygen-containing, carbon dioxide-containing gas mixture by bubble-streaming, filling the juice or juice blend into a high gas-barrier container to a level for attaining a headspace of 1% to 10% and preferably 3% to 10% of the total liquid volume, hermetically sealing the container and rapidly cooling the juice or juice blend in a container to -1°C to 2°C for cold shocking of the juice, and subsequent storage at -1.0°C to 2°C.

The steps in the process include: (a) the sanitizing of the outer surface of a fruit by a sanitizing agent in water applied to the fruit by immersion, spraying or other mechanical means; (b) extracting the juice from the edible portion of the fruit; (c) gasifying the juice at 5 to 20°C by bubble-streaming an oxygen-containing, carbon dioxide-containing gas mixture through the juice to bring about a specific level of

EP 0 608 224 B1

saturation of the juice for each gas in its dissolved state; (d) filling a high gas barrier container with the juice so that a headspace volume of 1 to 10% of that total juice volume exists; and (e) cold shocking the juice in a container by rapid cooling to temperatures of 0 to 2°C. Since the juice or juice blend must have low mold, yeast and bacterial counts as input fluids, sanitizing the outer surfaces of the fruit with a sanitizing agent such as chlorine in water (about pH 6) prior to juice extraction is an important step in the process system. This process system involves modified atmosphere packaging technology with the introduction of a gas mixture consisting of oxygen and carbon dioxide into a juice or juice blend packaged in a high gas-barrier container.

The processing system in one aspect includes: (a) sanitizing the outer surface of the fruit with a sanitizing agent such as chlorinated water to inactivate spoilage organisms; (b) extracting the juice from the edible portion of the fruit, at which time all of the cells are broken or disrupted, and adding other juices to form a blend; (c) gasifying the juice or juice blend at 5°C to 20°C by bubble streaming an oxygen-containing, carbon dioxide-containing gas mixture through the liquid; (d) filling the container with the juice or juice blend to a level for attaining a headspace volume of 3 to 10% of the total liquid volume; (e) hermetically sealing the container; and (f) rapidly cooling the juice or juice blend in a container to a temperature between 0°C and 2°C with a minimum hold time of 12 to 24 hours.

In the gasification step of the process, the gas mixture to be used in bubble-streaming should preferably consist of 2 to 15% oxygen and 10 to 80% carbon dioxide and with the addition of inert gases such as nitrogen, helium and/or argon being the inert gases. Bubble-streaming of the gas mixture involves the introduction of streams of very small bubbles into the juice or juice blend from numerous orifices in a gas dispersion unit such as inter-connected perforated pipes, sintered metal plates or sintered glass plates. Bubble-streaming of the gas mixture optimizes the gasification step by broad exposure of the juice or juice blend to numerous small gas bubbles, and speeds up the process of bringing about gas solubilization to a specific level of saturation of the juice or juice blend for each gas.

Alternatively, gasification of a juice or juice blend may take place when the product is in the container.

The container should be composed of a material which has high gas-barrier properties so that the internal gases do not pass through the container walls to the atmospheric air and atmospheric air is not transported through the wall to the interior of the container. The container may be flexible, semi-flexible or rigid, plastic, metal, paperboard and/or glass, and may be in any form such as a bag, or bottle.

Fresh citrus juices, tropical fruit juices, citrus-tropical fruit juices, and other fruit juices and juice blends contain disrupted and broken cells. The disrupted or broken cells lose their respiratory and ripening functionalities compared to whole intact cells in plant tissue. Juices contain compartmentalized active enzymes in the form of organelles such as mitochondria, endoplasmic reticulum, ribosomes and lysosomes. The serums of the juices and juice blends contain cytoplasmic respiratory enzymes which are capable of breaking down sugars to pyruvic acid. Pyruvic acid can be broken down in the mitochondria, in the presence of oxygen, to carbon dioxide and water by respiratory enzymes. In the aerobic respiration of a fruit, sugars and acids are degraded enzymatically in the respiration process to carbon dioxide and water. As well, adenosine triphosphate (ATP), a high energy biocompound, is formed in the aerobic respiration pathway. ATP is essential for the maintenance of the structures of organelle membranes, aerobic respiration process and the synthesis of pigments and flavour compounds.

If oxygen is lacking in the fresh juice blends, then anaerobic respiration may proceed. In the anaerobic respiration pathway, pyruvic acid is decomposed to off-flavour compounds such as ethanol, lactic acid and acetaldehyde. Further, only small amounts of ATP are formed and thus membrane structures may decompose with possible quality deterioration of the juice during storage.

The inventors have determined that to preserve the flavour, colour and texture of fresh citrus juices, tropical fruit juices, citrus-tropical fruit juice blends, and other fruit juices or fruit juice blends, degradative enzyme activities must be impeded, yet a low rate of aerobic respiration must be maintained to prevent anaerobic off-flavour development.

The inventors have also discovered that aerobic respiration occurs in fruit juices at a very low rate with the consumption of oxygen dissolved in the juice and the production of carbon dioxide. Previous studies on whole fruits and vegetables (C.G. Wang, In Food Preservation by Modified Atmospheres. 1990. Calderon, M. and Barkai-Golan, R. Eds. CRC Press, Boca Raton, FL.) have shown that carbon dioxide in the microatmosphere around fresh whole commodities can reduce the respiration rate, ethylene production and the rate of ripening.

The inventors have also discovered that if an oxygen-containing, carbon dioxide-containing gas mixture is bubbled through a fresh citrus juice, tropical fruit juice, a citrus-tropical fruit juice blend, or another type of fruit juice (for example, apple juice), to bring about specific levels of saturation of the juices forming the functional gases (oxygen and carbon dioxide), the rate of aerobic respiration in the juices derived from

5

broken and ruptured cells during extraction may be reduced considerably. For example, the respiration rate of pineapple juice was 1.08 mg $CO_2$/kg/24 hrs., for grapefruit juice, the rate was 0.74 mg $CO_2$/kg/24 hrs., and for orange juice, the rate was 0.98 mg $CO_2$/kg/24 hrs. at 2°C. The respiration rates dropped to zero after about 2 days of juice storage at 2°C. The advantages of reduced aerobic respiration rate of a fresh juice are: (a) the retention, to a large degree, of sugars and acids (thus little change in the sweetness and sourness attributes of a juice during prolonged storage); and, (b) limited carbon dioxide production from the aerobic respiration in a juice during prolonged storage so that gas pressure build-up of the container is not experienced. The carbon dioxide in the input gas mixture, when dissolved in a fresh juice, may inhibit the action of degradative enzymes.

The retention of ascorbic acid in citrus juices and citrus-tropical fruit juice blends is important since these juices are excellent sources of vitamin C. The inventors have further determined that the oxidation of ascorbic acid can be impeded by dissolving carbon dioxide in the juice through (a) the carbon dioxide mass action effect in the oxidation reaction with the displacement of oxygen from the ascorbic acid molecule, and (b) carbon dioxide adsorption on the active site of ascorbic acid oxidase and other oxidases involved in the oxidative decomposition of ascorbic acid.

Inhibition of microbial growth in fresh citrus juices, tropical fruit juices, citrus-tropical fruit juices, and any other fruit juice, or fruit juice blends, is essential for prolonging the shelf life of the products. Day, Skura and Powrie (Can. Inst. Food Sci. Technol. J. 23, 59, 1990) found that low oxygen and high carbon dioxide contents in the microatmosphere of a container can inhibit the growth of bacteria, yeasts and molds on blueberries. The growth of fungal organisms drops rapidly when the dissolved oxygen content is at a level of 10.5 $\mu$M/litre (El-Goorani and Sommer, Hort. Reviews 3, 412, 1981). Thus lowering the content of dissolved oxygen to about 10 $\mu$M/litre in citrus juices, tropical fruit juices, citrus-tropical fruit juice blends, or other fruit juices, should impede fungal growth sufficiently over an eight week period to obviate any quality deterioration.

It has been found for the purpose of our invention that the level of ripeness of each whole fruit is an important factor in the successful preservation of the freshly extracted fruit juice, or juice blend, by the modified atmosphere packaging (MAP) of the invention. Fruit for extraction into juice or juice blends should be ripened to an eating quality level. Such ripe fruit will have a characteristic fresh flavour and an optimum colouration. The fruit should be free of pre-harvest diseases, bruising and post-harvest microbial decomposition.

Juices should be extracted from edible portions of ripe fruits by reaming, masceration, pressing or other means. The cell walls must be ruptured during extraction to free the vascular solution and organelles. The amount of broken cell wall residue (pulp) will have an influence on the consistency of the extracted juice, but should not be a critical factor in the success of the preservation process. The presence of the organelles in the extracted juice is considered to be complementary to the influence of the input carbon dioxide. A certain degree of pulp may be removed from extracted juices by screen or sedimentation separation operations.

It has been determined that the pH of fruit juices and juice blends to be packaged under modified atmosphere (MAP) should be below 4.5 to ensure safety and effective preservation of the freshness for extended storage times.

Gasification of the juices and juice blends by bubble-streaming is required to create functional gas solutions of carbon dioxide and oxygen. Inert gases such as nitrogen, argon and helium may be considered. The carbon dioxide in solution is functional as an antimicrobial agent, and as an inhibitor of ethylene production, ripening and respiration. It is well known that excessive levels of carbon dioxide in intact fruit tissue can cause injury to the membranes and bring about quality deterioration to the fruit. However, when the cells of citrus and tropical fruits are ruptured during the extraction process, the resulting juices can tolerate higher levels of carbon dioxide in solution than intact fruit tissue. Oxygen in the juices and juice blends is a functional gas for maintaining limited aerobic enzymic reactions to prevent off-flavour development, to stabilize membranes of the organelles and to encourage synthesis of desirable flavours and pigments.

Low levels of oxygen and high levels of carbon dioxide are to be present in the gas mixture for gasification. The levels of 1 to 15% oxygen and 10 to 80% carbon dioxide in the gas mixture are required to preserve the juices and juice blends for periods up to about 10 weeks. The levels of 2 to 3% oxygen and 40 to 80% carbon dioxide in the gas mixture are preferred to effectively inhibit microbial growth, respiration and ripening, yet to maintain a limited aerobic environment.

Prior to gasification, the temperatures of the juices and juice blends should be in the range of 5 to 20°C, with a preferred temperature range of 5 to 10°C for effective solubilization of the gases. Undoubtedly, the gasified juices or juice blends in sealed containers will be subjected to temperature abuse (temperatures to about 12°C) during storage, transportation and retailing. If so, liquids should be between 8 to 10°C at the time of gasification in order to prevent excessive gas pressure in the headspaces of the sealed containers subjected to temperature abuse. Normally, gasified juices and juice blends in sealed containers should be held at 0 to 6°C during storage, transport and retailing for prolonging the shelf life.

We have discovered that the containers, after being filled with extracted fruit juice or juice blend and being sealed, or closed, should be placed in a refrigerated room or bath with temperatures of about -1°C to 2°C. This appears to prompt the fruit juice to enhance defence mechanisms against tissue deterioration. These lower outer temperatures are also beneficial to increase water solubility of oxygen in the fruit juice. Further, since the solubility of carbon dioxide in water increases with a decrease in temperature, the enzyme generated carbon dioxide produced in the fruit juice should be retained. The large amount of carbon dioxide in the juice will thereby effectively inhibit enzyme deteriorating reactions and inhibit deteriorating microbial growth. Further, the low temperature of the fruit juice reduces enzymic reaction rates, and inhibits microbial growth.

Advantageously, the containers may be constructed of a non-flexible, semi-flexible or flexible material which may possess sufficient structural rigidity to enable a slight positive gas pressure to be maintained in the containers. A container constructed of a laminate composed of layers of polyethylene with an intermediate layer of ethylomyl alcohol is suitable. Such positive pressure could have the advantage that it would enhance carbon dioxide solubility.

The following discussion, examples and tabulated data explain and illustrate certain specific conditions which have been used according to the invention for the successful preservation of freshly squeezed fruit juice and juice blends for prolonged periods of time. Some freshly squeezed fruit juices and juice blends which we have preserved successfully by the modified atmosphere packaging process of this invention include: orange juice, grapefruit juice, pineapple juice and blends of orange and mango juices and orange and pineapple juices, and apple juice and grape juice, and raspberry juice.

Example 1

Freshly prepared orange juice was extracted in-house from Valencia oranges, and packaged under modified atmosphere packaging (MAP), as outlined above, then cooled rapidly at 2°C and then stored at 2°C. The quality of jucie was compared with freshly extracted juice, by both chemical and sensory analysis for the storage period of eight weeks.

Before juice extraction, the whole oranges were washed in 300 ppm chlorine solution to reduce the surface microbial population of the fruit. After extraction, the juice was immediately dispensed into pouches made from high gas barrier plastic film and the juice was then stream bubbled with a special gas mix with a composition of 10% oxygen, 60% carbon dioxide, 5% argon and 25% nitrogen, for 20 to 30 seconds before the pouches were sealed. This gasification procedure is the alternative method (as mentioned previously) to gasification of juice and juice blends prior to filling into containers. The pouches were stored at 2°C for eight weeks.

Chemical analyses on the juices included determination of percent soluble solids, percent titratable acidity, pH, and ascorbic acid content. From a nutritional standpoint, ascorbic acid (vitamin C) retention is of paramount importance since ascorbic acid is destroyed rapidly under aerobic conditions.

For sensory analysis of the juices, sensory evaluation sessions were held every other week during storage. The stored MAPed juice and the freshly extracted juice as a standard were compared by panelists for sensory evaluation. The sensory attributes evaluated were: (1) visual appeal; and (2) flavour. Attributes included in the visual appeal included colour and cloudiness. The flavour attributes included: sweet/sour balance, fruit flavour, off-flavour, and body (see Figure 1 as an example). A score of 10 means best in quality, and a score of 1 means worst in quality. For off-flavour, 10 means absolutely no off-flavour, and 1 means very strong off-flavour. A score of 5 was the cut-off point between acceptability and unacceptability.

Results

Visual appeal and body of MAPed orange juice did not change over the entire storage period, as compared to the freshly extracted orange juice standard. The sensory evaluation results of orange flavour and off-flavour during the storage period are presented in Table 1. The results indicated that MAPed orange juice remained highly acceptable throughout the eight-week storage period, with scores of 9 or greater.

Regarding chemical analysis, the results showed that percentage titratable acidity (%TA) values of the MAPed orange juice remained relatively constant throughout the storage period. Soluble solids (%SS) values for the juices decreased very slowly with time. After eight weeks of storage, soluble solids value

EP 0 608 224 B1

decreased from about 10% to 9.5%.

## Table 1

## Sensory Evaluation Results for Stored MAPed
## and Freshly Extracted Orange Juices

### a. ORANGE FLAVOUR

| Storage Time (Weeks) | Score | |
|---|---|---|
| | MAPed Juice | Freshly Extracted[1] Orange Juice |
| 0 | 10.0 | 10.0 |
| 2 | 9.9 | 10.0 |
| 4 | 9.9 | 10.0 |
| 6 | 9.6 | 10.0 |
| 8 | 9.4 | 10.0 |

[1] Freshly extracted from oranges on the day that the stored MAPed juice was tested.

### b. ABSENCE OF OFF-FLAVOUR

| Storage Time (Weeks) | Score | |
|---|---|---|
| | MAPed Juice | Freshly Extracted Orange Juice |
| 0 | 10 | 10 |
| 2 | 10 | 10 |
| 4 | 10 | 10 |
| 6 | 10 | 10 |
| 8 | 10 | 10 |

Ascorbic acid contents of the stored MAPed juices during storage are presented in Table 2. The results indicate that the ascorbic acid content of stored MAPed juice remained relatively constant during the entire eight week storage period.

8

Table 2

| Ascorbic Acid Content of Stored MAPedOrange Juice | | | | | |
|---|---|---|---|---|---|
| Juice Sample | Ascorbic Acid Content Storage Time (Weeks) | | | | |
| | 0 | 1 | 4 | 6 | 8 |
| MAPed Orange Juice | 38.3 | 39.8 | 39.2 | 38.6 | 40.0 |

Example 2

Orange Juice Blends

Before juicing, whole oranges, mangoes and pineapples were washed in 300 ppm chlorine solution for 3 to 5 minutes to reduce the microbial population on the fruit surface. After extraction, the juices were mixed immediately as follows:

1. Orange juice and pineapple juice were blended together in the volume ratio of 80 to 20 respectively.

2. Mango juice and orange juice were blended together in a volume ratio of 10 to 90 respectively.

The juice blends were gasified with a bubble stream of a gas mixture composed of: 8% oxygen, 70% carbon dioxide, 3% argon, and the balance nitrogen, for 20 to 30 seconds. The juice blends were then filled into pouches of high gas-barrier properties and the pouches were sealed. The sealed pouches were then cooled immediately to 20° and stored at 2°C for 8 weeks.

For sensory analysis of the juice blends, sensory evaulation sessions were held at about one week intervals. The sensory attributes evaluated included visual appeal, sweet/sour balance, flavour, body, off-flavour and overall acceptability. The results are listed in Tables 3 and 4.

The sensory attributes of the MAPed mango-orange juice and pineapple-orange juice blends did not change appreciably over the entire 8 week storage period. There was no significant development of off-flavour, and there was only a slight decrease in flavour acceptability.

Overall, both the 10% mango in orange juice and the 20% pineapple in orange juice blends performed very well in the MAP storage study, showing no appreciable colour change, loss of flavour, or off-flavour development over the 8 week storage period.

Chemical analyses on the juice blends included the determination of percent soluble solids, percent titratable acidity, pH, and ascorbic acid. Over the 8 week storage period, the value of percent soluble solids, percent titratable acidity, and pH did not change appreciably. The ascorbic acid content of the juice blends during storage remained relatively constant.

EP 0 608 224 B1

## Table 3
### Summary of Sensory Evaluation Results
### for Orange Juice Blends

A.   10% MANGO IN ORANGE JUICE (REPLICATE #1)

| | Storage Time (Weeks) | | | | |
|---|---|---|---|---|---|
| Attribute | 0 | 1 | 4 | 6 | 8 |
| Visual Appeal | exc | exc/good | exc/good | good | good/exc |
| Sweet/Sour Balance | exc | exc/sweet | bit sweet | bit sweet | bit sweet |
| Flavour | exc | good | good | good | good |
| Body | acceptable | acceptable | acceptable | acceptable | acceptable |
| Off-Odour | none | none | none | none | none |
| Overall Acceptability | acceptable | acceptable | acceptable | acceptable | acceptable |

## Table 3 (Continued)

10% MANGO IN ORANGE JUICE (REPLICATE #2)

| Attribute | Storage Time (Weeks) | | | | |
|---|---|---|---|---|---|
| | 0 | 1 | 4 | 6 | 8 |
| Visual Appeal | exc | exc/good | exc/good | exc | good/exc |
| Sweet/Sour Balance | exc | bit sweet | bit sweet | bit sweet | bit sweet |
| Flavour | good | exc/good | good | fair | good |
| Body | acceptable | acceptable | acceptable | acceptable | acceptable |
| Off-Odour | none | none | none | none | none |
| Overall Acceptability | acceptable | acceptable | acceptable | acceptable | acceptable |

## Table 4

**B. 20% PINEAPPLE IN ORANGE JUICE (REPLICATE #1)**

| Attribute | Storage Time (Weeks) | | | | |
|---|---|---|---|---|---|
| | 0 | 1 | 4 | 6 | 8 |
| Visual Appeal | exc | exc/good | good | fair | good |
| Sweet/Sour Balance | exc | exc/bit sour | bit sweet | bit sour | bit sour |
| Flavour | exc/good | exc/good | exc | good | good |
| Body | acceptable | acceptable | acceptable | acceptable | acceptable |
| Off-Odour | none | none | none | none | none |
| Overall Acceptability | acceptable | acceptable | acceptable | acceptable | acceptable |

EP 0 608 224 B1

EP 0 608 224 B1

## Table 4 (Continued)

### 20% PINEAPPLE IN ORANGE JUICE (REPLICATE #2)

|                        |            | Storage Time (Weeks) |            |                        |            |
| ---------------------- | ---------- | -------------------- | ---------- | ---------------------- | ---------- |
| Attribute              | 0          | 1                    | 4          | 6                      | 8          |
| Visual Appeal          | exc        | good                 | good       | good                   | good       |
| Sweet/Sour Balance     | exc/good   | bit sour             | bit sweet  | bit sweet<br>bit sour  | bit sour   |
| Flavour                | exc        | good                 | exc/good   | good                   | good       |
| Body                   | acceptable | acceptable           | acceptable | acceptable             | acceptable |
| Off-Odour              | none       | none                 | none       | none                   | none       |
| Overall Acceptability  | acceptable | acceptable           | acceptable | acceptable             | acceptable |

Example 3

Grapefruit Juice

Fresh grapefuit juice was extracted from California white and pink grapefruit using the same method as described in the previous examples. A gas mix of 3% oxygen, 70% carbon dioxide, 5% argon and 20% nitrogen was used for bubbling the juice. The juice was bottled in high barrier plastic bottles, sealed air tight, and then stored in a cold room at about 2°C.

Sensory analysis was carried out at approximately one week intervals. The attributes included visual appeal, sweet/sour balance, flavour body and absence of off-flavour. A summary of sensory evaluation results is shown in Figure 1. From Figure 1, it can be seen that after 10 weeks (71 days) of storage, the grapefruit juice maintained its high fresh quality.

Example 4

Grapefruit Juice Blends

Fresh grapefruit juice, orange juice and pineapple juice was extracted according to the previously described procedures and two kinds of grapefruit juice blends were prepared:

1. Grapefruit juice-orange juice (50:50);
2. Grapefruit juice-pineapple juice (80:20).

Gasification was carried out using a gas mix of 5% oxygen and 65% carbon dioxide, balanced with nitrogen. The juice blends were then distributed to high barrier containers and sealed air tight. For storage, they were kept at about 2°C.

Sensory evaluation was carried out after the juices had been stored for 2, 4, 6 and 8 weeks. After 8 weeks of storage, the results were as shown in Table 5.

Table 5

|  | Grapefruit Juice-Orange Juice | Grapefruit Juice-Pineapple Juice |
|---|---|---|
| Visual Appeal | Excellent/good | Good |
| Sweet/sour balance | Excellent | Excellent - a bit sour |
| Flavour | Excellent/good | Excellent/good |
| Body | Acceptable | Acceptable |
| Off-flavour | None | None |
| Overall Acceptability | Very acceptable | very acceptable/acceptable |

## Claims

1. A process for preserving fresh fruit juice extracted from fruit characterized by sanitizing the outer surface of a fruit, extracting juice from the edible portion of the fruit, gasifying the juice with an oxygen-containing, carbon dioxide-containing gas mixture, placing the juice in a container, hermetically sealing the container and rapidly cooling the juice in the container.

2. A process according to claim 1 wherein the fruit is a citrus fruit, a tropical fruit, a fruit or a combination thereof.

3. A process according to claim 2 wherein the juice is placed in the container so that there is a headspace volume of 1 to 10%.

4. A process according to claim 1 wherein the juice is cooled to -1°C to 2°C.

5. A process according to claim 1 wherein the oxygen-containing, carbon dioxide-containing gas mixture is introduced into the juice by bubble-streaming to bring about a predetermined level of gas saturation of the juice for each of the gases in the dissolved state; the gas-treated juice is packaged in a high gas-barrier container to prevent air entry into the container and outflow of gas within the containers; and the juice in the container is rapidly cooled to cold shock the juice.

6. A process according to claim 1 wherein the juice is gasified with an oxygen-containing, carbon dioxide-containing gas mixture to bring about a specific level of gas saturation of the juice for each gas in its dissolved state.

7. A process according to claim 3 wherein the headspace volume is 3 to 7%.

8. A process acccording to claim 1 wherein the fruit is sanitized with a sanitizing agent.

9. A process according to claim 8 wherein the sanitizing agent is selected from the group consisting of chlorine, peroxide, bleach and an oxidizing agent.

10. A process according to claim 9 wherein the sanitizing agent is chlorine in water.

11. A process according to claim 1 wherein the juice is gasified by bubble streaming.

12. A process according to claim 11 wherein the juice is gasified at a temperature between 5 to 20°C.

13. A process according to claim 1 wherein the container is a high gas barrier container.

14. A process according to claim 1 wherein the juice is rapidly cooled in a container to a temperature between -1°C and 2°C with a minimum hold time of 12 to 24 hours.

15. A process according to claim 1 wherein the gas mixture consists of 2 to 15% oxygen, 10 to 80% carbon dioxide, and an inert gas.

16. A process according to claim 15 wherein the inert gas is nitrogen, argon, helium or any other inert gas.

17. A process according to claim 1 wherein the gas mixture is introduced into the juice in the form of small bubbles from a plurality of orifices in a gas dispersion unit.

18. A process according to claim 17 wherein the gas dispersion unit is constructed of inter-connected perforated pipes or sintered metal plates or sintered glass plates.

19. A process according to claim 1 wherein the container is composed of a material which has high gas-barrier properties so that internal gases are not transported through the walls of the container to the atmosphere and atmospheric air is not transported through the walls of the container to the interior of the container.

20. A process according to claim 19 wherein the container is constructed of a flexible, semi-flexible or rigid material.

21. A process according to claim 20 wherein the container is composed of plastic, metal, paperboard or glass, in the form of a bag or bottle.

22. A process according to claim 19 wherein the container is constructed of a polyethylene-polyvinyl alcohol laminate.

23. A process according to claim 1 wherein the juice is stored at a temperature between -1°C to 6°C.

24. A process according to claim 1 wherein the juice contains only broken or disrupted fruit cells.

25. A process according to claim 1 wherein the juice is placed into the container before it is gasified.

**Patentansprüche**

1. Ein Verfahren zur Konservierung von frischem Fruchtsaft, der aus Früchten extrahiert wird, dadurch gekennzeichnet, daß die äußere Oberfläche einer Frucht hygienisch gereinigt wird, wobei der Saft aus dem eßbaren Teil der Frucht extrahiert wird, der Saft mit einem sauerstoffhaltigen, kohlensäurehaltigen Gasgemisch vergast wird, der Saft in einen Behälter gegeben wird, der Behälter luftdicht verschlossen und der Saft rasch im Behälter abgekühlt wird.

2. Ein Verfahren gemäß Anspruch 1, dadurch gekennzeichnet, daß die Frucht eine Zitrusfrucht, eine tropische Frucht, eine Frucht oder eine Kombination derselben ist.

3. Ein Verfahren gemäß Anspruch 2, dadurch gekennzeichnet, daß der Saft so in einen Behälter gegeben wird, daß ein Luftraumvolumen von 1 bis 10% verbleibt.

4. Ein Verfahren gemäß Anspruch 1, dadurch gekennzeichnet, daß der Saft auf -1°C bis 2°C abgekühlt wird.

5. Ein Verfahren gemäß Anspruch 1, dadurch gekennzeichnet, daß das sauerstoffhaltige, kohlensäurehaltige Gasgemisch durch Bläschenströmung in den Saft eingeführt wird, um ein festgelegtes Gassättigungsniveau des Saftes für die jeweiligen Gase in gelöstem Zustand zu erreichen; der mit Gas versehene Saft wird in einem besonders gasbeständigen Behälter verpackt, um Lufteintritt in den Behälter und Gasausströmung im Behälter zu verhindern; und der Saft im Behälter wird rasch angekühlt, um den Saft einem Kaltschock zu unterziehen.

6. Ein Verfahren gemäß Anspruch 1, dadurch gekennzeichnet, daß der Saft mit einem sauerstoffhaltigen, kohlensäurehaltigen Gasgemisch vergast wird, um ein bestimmtes Gassättigungsniveau des Saftes für jedes Gas in seinem gelösten Zustand zu erreichen.

7. Ein Verfahren gemäß Anspruch 3, dadurch gekennzeichnet, daß das Luftraumvolumen 3 bis 7% beträgt.

8. Ein Verfahren gemäß Anspruch 1, dadurch gekennzeichnet, daß die Frucht mit einem Reinigungsmittel gereinigt wird.

9. Ein Verfahren gemäß Anspruch 8, dadurch gekennzeichnet, daß das Reinigungsmittel aus einer Gruppe gewählt wird, die aus Chlorgas, Peroxid, Bleich- und einem Oxidationsmittel besteht.

10. Ein Verfahren gemäß Anspruch 9, dadurch gekennzeichnet, daß das Reinigungsmittel aus Chlorgas im Wasser besteht.

11. Ein Verfahren gemäß Anspruch 1, dadurch gekennzeichnet, daß der Saft durch Bläschenströmung vergast wird.

12. Ein Verfahren gemäß Anspruch 11, dadurch gekennzeichnet, daß der Saft bei einer Temperatur von 5 bis 20°C vergast wird.

13. Ein Verfahren gemäß Anspruch 1, dadurch gekennzeichnet, daß der Behälter ein besonders gasbeständiger Behälter ist.

14. Ein Verfahren gemäß Anspruch 1, dadurch gekennzeichnet, daß der Saft rasch in einem Behälter auf eine Temperatur zwischen -1°C und 2°C abgekühlt wird mit einer Minimalbeibehaltungszeit von 12 bis 24 Stunden.

15. Ein Verfahren gemäß Anspruch 1, dadurch gekennzeichnet, daß das Gasgemisch aus 2 bis 15% Sauerstoff, 10 bis 80% Kohlensäure und einem Edelgas besteht.

16. Ein Verfahren gemäß Anspruch 15, dadurch gekennzeichnet, daß das Edelgas Stickstoff, Argon, Helium oder ein beliebiges anderes Edelgas ist.

**17.** Ein Verfahren gemäß Anspruch 1, dadurch gekennzeichnet, daß das Gasgemisch in den Saft in Form von kleinen Bläschen eingeführt wird, die aus einer Vielzahl von Öffnungen in einem Gasverteiler kommen.

**18.** Ein Verfahren gemäß Anspruch 17, dadurch gekennzeichnet, daß der Gasverteiler aus untereinander verbundenen, perforierten Rohren oder Sintermetallplatten oder Sinterglasplatten zusammengesetzt ist.

**19.** Ein Verfahren gemäß Anspruch 1, dadurch gekennzeichnet, daß der Behälter aus einem Material mit besonders gasbeständigen Eigenschaften besteht, so daß Innengase nicht durch die Wände des Behälters in die Atmosphäre befördert werden und Außenluft nicht durch die Wände des Behälters in das Innere des Behälters befördert wird kann.

**20.** Ein Verfahren gemäß Anspruch 19, dadurch gekennzeichnet, daß der Behälter aus einem flexiblen, semi-flexiblen oder steifen Material gebildet ist.

**21.** Ein Verfahren gemäß Anspruch 20, dadurch gekennzeichnet, daß der Behälter aus Plastik, Metall, Karton oder Glas zusammengesetzt ist und sackförmig oder flaschenförmig ist.

**22.** Ein Verfahren gemäß Anspruch 19, dadurch gekennzeichnet, daß der Behälter aus einem Polyethylen-Polyvinylalkohol-Laminatzusammengesetzt ist.

**23.** Ein Verfahren gemäß Anspruch 1, dadurch gekennzeichnet, daß der Saft bei einer Temperatur von -1°C bis 6 °C gelagert wird.

**24.** Ein Verfahren gemäß Anspruch 1, dadurch gekennzeichnet, daß der Saft nur zerbrochene oder zersprungene Fruchtzellen enthält.

**25.** Ein Verfahren gemäß Anspruch 1, dadurch gekennzeichnet, daß der Saft in einen Behälter gegeben wird bevor er vergast wird.

**Revendications**

**1.** Un procédé de conservation du jus de fruit frais extrait de fruits caractérisé en ce que la surface extérieure d'un fruit est nettoyée d'une manière sanitaire, le jus est extrait de la partie comestible du fruit, le jus est gazéifié au moyen d'un mélange gazeux qui contient de l'oxygène et gaz carbonique, le jus est mis dans un récipient, le récipient est fermé hermétiquement et en ce que le jus est refroidi rapidement à l'intérieur du récipient.

**2.** Un procédé selon la revendication 1 caractérisé en ce que les fruits sont des agrumes, des fruits exotiques, un fruit ou une combinaison de ceux-ci.

**3.** Un procédé selon la revendication 2 caractérisé en ce que le jus est mis dans un récipient d'une manière qu'on y obtient un volume d'espace vide de 1 à 10%.

**4.** Un procédé selon la revendication 1 caractérisé en ce que le jus est refroidi jusqu'à -1°C à 2°C.

**5.** Un procédé selon la revendication 1 caractérisé en ce que le mélange gazeux contenant de l'oxygène et gaz carbonique est introduit dans le jus par un courant des bulles pour atteindre un niveau prédéterminé de saturation en gaz du jus pour chaque gaz dans son état en dissolution; le jus étant enrichi en gaz est mis dans un récipient très fort à l'épreuve du gaz pour éviter que l'air puisse entrer dans le récipient et qu'il n'y ait pas de fuite de gaz à l'intérieur du récipient; et le jus est refroidi rapidement dans le récipient pour rendre le jus sous un choc de froid artificiel.

**6.** Un procédé selon la revendication 1 caractérisé en ce que le jus est gazéifié par un mélange gazeux contenant de l'oxygène et gaz carbonique pour atteindre un niveau spécifique de saturation en gaz du jus pour chaque gaz dans son état en dissolution.

**7.** Un procédé selon la revendication 3 caractérisé en ce que le volume de l'espace vide est de 3 à 7%.

**8.** Un procédé selon la revendication 1 caractérisé en ce que le fruit est nettoyé avec un produit de nettoyage.

**9.** Un procédé selon la revendication 8 caractérisé en ce que le produit de nettoyage est choisi d'un groupe qui consiste en un chlore, un peroxyde, un agent de blanchiment et un agent d'oxydation.

**10.** Un procédé selon la revendication 9 caractérisé en ce que le produit de nettoyage est un chlore dans l'eau.

**11.** Un procédé selon la revendication 1 caractérisé en ce que le jus est gazéifié par un courant des bulles.

**12.** Un procédé selon la revendication 11 caractérisé en ce que le jus est gazéifié à une température de 5 à 20 °C.

**13.** Un procédé selon la revendication 1 caractérisé en ce que le récipient est un récipient qui est très fort à l'épreuve du gaz.

**14.** Un procédé selon la revendication 1 caractérisé en ce que le jus est refroidi rapidement dans un récipient à une température de -1°C et de 2°C ayant une durée de maintien minimale de 12 à 24 heures.

**15.** Un procédé selon la revendication 1 caractérisé en ce que le mélange gazeux se compose de 2 à 15% d'oxygène, 10 à 80% de gaz carbonique et un gaz rare.

**16.** Un procédé selon la revendication 15 caractérisé en ce que le gaz rare est un nitrogène, argon, hélium ou n'importe quel autre gaz rare.

**17.** Un procédé selon la revendication 1 caractérisé en ce que le mélange gazeux est introduit dans le jus en forme de petites bulles à partir d'une pluralité d'orifices d'un dispositif de dispersion pour gaz.

**18.** Un procédé selon la revendication 17 caractérisé en ce que le dispositif de dispersion pour gaz est formé de tuyaux perforés et interconnectés ou plaques frittées ou plaques en verre fritté.

**19.** Un procédé selon la revendication 1 caractérisé en ce que le récipient se compose d'un matériau ayant des propriétés fortement à l'épreuve du gaz de sorte que les gaz intérieurs ne sont pas transportés à travers les parois du récipient à l'atmosphère et l'air extérieur n'est pas transporté à travers les parois du récipient à l'intérieur du récipient.

**20.** Un procédé selon la revendication 19 caractérisé en ce que le récipient est fait d'une matière flexible, semi-flexible ou rigide.

**21.** Un procédé selon la revendication 20 caractérisé en ce que le récipient se compose d'une matière synthétique, d'un métal, carton ou verre sous la forme d'un sac ou bouteille.

**22.** Un procédé selon la revendication 19 caractérisé en ce que le récipient est réalisé par un laminé de polyéthylène-alcool polyvinylique.

**23.** Un procédé selon la revendication 1 caractérisé en ce que le jus est stocké à une température de -1°C à 6°C.

**24.** Un procédé selon la revendication 1 caractérisé en ce que le jus contient seulement des cellules de fruit brisées ou crevées.

**25.** Un procédé selon la revendication 1 caractérisé en ce que le jus est mis dans le récipient avant qu'il soit gazéifié.

GRAPEFRUIT JUICE

Time (days)

Visual Appeal   Sweet/sour balance   Flavour   Body   Off flavour
Acceptability

FIGURE 1

EP 0 608 224 B1